# EUROPÄISCHE PATENTSCHRIFT

(11) **EP 4 284 997 B1**
(45) Veröffentlichungstag und Bekanntmachung des Hinweises auf die Patenterteilung: **11.02.2026**
(21) Anmeldenummer: 22701595.5
(22) Anmeldetag: 24.01.2022
(51) Int. Cl.: E06B 3/663

(54) **ABSTANDHALTER FÜR ISOLIERVERGLASUNGEN**
SPACER FOR INSULATING GLASING UNIT
ENTRETOISE POUR VITRAGES ISOLANTS

(30) Priorität: 27.01.2021 EP 21153796
(43) Veröffentlichungstag der Anmeldung: 06.12.2023
(73) Patentinhaber: Saint-Gobain Glass France, 92400 Courbevoie (FR)
(72) Erfinder: BERGS, Bianca, 52538 Gangelt (DE); SCHREIBER, Walter, 52074 Aachen (DE); MARJAN, Christopher, 52072 Aachen (DE); FLORIN, Pierrick, 60153 Rethondes (FR)
(74) Vertreter: SGR Germany-Patents
(86) Internationale Anmeldenummer: PCT/EP2022/051425
(87) Internationale Veröffentlichungsnummer: WO 2022/161890

(56) Entgegenhaltungen:
- WO-A1-2016/139180
- WO-A1-2017/174333
- WO-A1-2021/008951
- DE-A1- 2 929 544

## Beschreibung

Die Erfindung betrifft einen Abstandhalter für Isolierverglasungen, eine Isolierverglasung umfassend einen solchen Abstandhalter und ein Verfahren zu dessen Herstellung.

Isolierverglasungen sind vor allem im Zuge immer strengerer Umweltschutzauflagen nicht mehr aus dem Gebäudebau wegzudenken. Diese werden dabei aus mindestens zwei Scheiben gefertigt, die über mindestens einen umlaufenden Abstandshalter miteinander verbunden sind. Je nach Ausführungsform ist der als Verglasungsinnenraum bezeichnete Zwischenraum der beiden Scheiben luft- oder gasgefüllt, in jedem Fall jedoch frei von Feuchtigkeit. Ein zu hoher Gehalt an Feuchtigkeit im Verglasungszwischenraum führt besonders bei kalten Außentemperaturen zur Kondensation von Wassertropfen im Scheibenzwischenraum, was unbedingt zu vermeiden ist. Zur Aufnahme der nach der Montage im System verbleibenden Restfeuchtigkeit können beispielsweise mit einem Trockenmittel gefüllte Hohlkörperabstandshalter verwendet werden.

DE 2929544 A1 offenbart einen metallischen Abstandhalter für Isolierverglasungen, der eine verbesserte Biegbarkeit im Eckbereich der Isolierverglasung aufweist.

Neben der Abdichtung des Scheibenzwischenraums gegen Feuchtigkeit besteht eine weitere entscheidende Aufgabe des Abstandhalters in der thermischen Entkopplung von Gebäudeinnenraum auf der einen Seite der Isolierverglasung und Umgebung auf der gegenüberliegenden Seite der Isolierverglasung. Die Wärmeleitfähigkeit der Abstandhalter hat dabei einen nicht zu vernachlässigenden Einfluss auf die thermischen Eigenschaften der Scheibe. Abstandhalter bestehen in einer der bekannten Ausführungsformen aus einem Leichtmetall, üblicherweise Aluminium. Diese lassen sich leicht verarbeiten, jedoch wird die isolierende Wirkung der Verglasung im Randbereich aufgrund der guten Wärmeleitfähigkeit des Aluminiums deutlich herabgesetzt (auch als *cold edge*-Effekt bezeichnet).

Um die thermischen Eigenschaften zu verbessern, sind sogenannte *warm edge*-Lösungen für Abstandhalter bekannt. Diese Abstandhalter bestehen insbesondere aus Kunststoff und weisen folglich eine deutlich verringerte Wärmeleitfähigkeit auf. Im Vergleich zu Abstandhaltern aus Metall mangelt es den Kunststoffabstandhaltern an einer ausreichenden Gasdichtigkeit, die wiederum durch auf die Außenfläche der Abstandhalter aufgebrachte Isolationsfolien erreicht werden kann.

WO 2013/104507 A1 offenbar einen Abstandhalter mit einem polymeren Hohlprofilgrundkörper und einer Isolationsfolie. Die Isolationsfolie enthält dabei eine polymere Folie und mindestens zwei metallische oder keramische Schichten, die alternierend mit mindestens einer polymeren Schicht angeordnet sind.

WO 2021/008951 A1 beschreibt einen Hohlprofilabstandhalter mit Isolationsfolie, wobei die Isolationsfolie mindestens eine geschäumte Polymerschicht und mindestens eine Barriereschicht umfasst.

In WO 2017/174333 A1 ist eine Isolierglaseinheit für ein Kühlmöbel offenbart, die eine erste Scheibe und eine zweite Scheibe umfasst, die über einen Abstandhalterrahmen miteinander verbunden sind. Der Abstandhalterrahmen umfasst dabei erste Hohlprofilabstandhalter mit einem Anteil von 5 % bis 50 % Verstärkungsfasern und zweite Hohlprofilabstandhalter mit einem Anteil von 0 % bis 0,5 % Verstärkungsfasern, wobei die zweiten Hohlprofilabstandhalter vorzugsweise transparent sind.

Um auch die Wärmeleitfähigkeit polymerer Abstandhalter noch weiter zu senken bestehen Bestrebungen Abstandhalter nicht nur als Hohlprofil auszuführen, sondern darüber hinaus auch den Luftanteil innerhalb des Materials zu erhöhen. So ist in DE 19807454 A1 ein geschäumter Kunststoffabstandhalter beschrieben. Solche geschäumten polymeren Abstandhalter können beispielsweise durch den Zusatz von Schäumungsmitteln erzeugt werden, wie in EP 2930296 A1 gezeigt. Auch in WO 2016/139180 A1 ist ein geschäumter polymerer Abstandhalter offenbart, der durch Zugabe eines Schäumungsmittels erzeugte Hohlräume enthält.

Das Aufschäumen des Abstandhaltergrundkörpers hat jedoch, abhängig von der Richtung der auf den Abstandhalter wirkenden Kraft, einen negativen Einfluss auf die mechanischen Eigenschaften des Abstandhalters. Geschäumte Abstandhalter weisen zwar häufig eine gute mechanische Festigkeit, jedoch eine mangelnde Elastizität und ein unzureichendes Bruchverhalten auf. Darüberhinausgehend besteht auch bei ungeschäumten polymeren Abstandhaltern das Bedürfnis die Bruchfestigkeit zu verbessern.

Aufgabe der vorliegenden Erfindung ist es, einen Abstandshalter, der eine geringe Wärmeleitfähigkeit bei gleichzeitig hoher Bruchfestigkeit aufweist, eine Isolierverglasung mit diesem Abstandshalter, sowie ein Verfahren zur Herstellung des Abstandhalters bereitzustellen.

Die Aufgabe der vorliegenden Erfindung wird erfindungsgemäß durch einen Abstandhalter nach dem unabhängigen Anspruch 1 und eine Isolierverglasung mit Abstandhalter nach dem abhängigen Anspruch 13 gelöst.

Bevorzugte Ausführungen der Erfindung gehen aus den Unteransprüchen hervor.

Der erfindungsgemäße Abstandhalter für Isolierverglasungen umfasst mindestens einen polymeren Grundkörper umfassend zwei Scheibenkontaktflächen, eine Verglasungsinnenraumfläche, eine Außenfläche und eine Hohlkammer. Die zwei Scheibenkontaktflächen des Abstandhalters werden als erste Scheibenkontaktfläche und zweite Scheibenkontaktfläche bezeichnet. Die erste Scheibenkontaktfläche und die zweite Scheibenkontaktfläche stellen die Seiten des Abstandhalters dar, an denen beim Einbau des Abstandhalters die Montage der äußeren Scheiben (erste Scheibe und zweite Scheibe) einer Isolierverglasung erfolgt. Die erste Scheibenkontaktfläche und die zweite Scheibenkontaktfläche liegen einander gegenüber und verlaufen parallel zueinander. Die Verglasungsinnenraumfläche und die Außenfläche sind über die erste Scheibenkontaktfläche und die zweite Scheibenkontaktfläche miteinander verbunden. Der von den Scheibenkontaktflächen, der Außenfläche und der Verglasungsinnenraumfläche umschlossene Raum ist die Hohlkammer des Abstandhalters. Die Verglasungsinnenraumfläche und die Außenfläche verlaufen zumindest abschnittsweise parallel zueinander. Die Außenfläche des Abstandhalters ist jeweils benachbart zu den Scheibenkontaktflächen abgewinkelt, wodurch eine erhöhte Stabilität des Grundkörpers erzielt wird. Benachbart zur ersten Scheibenkontaktfläche weist die Außenfläche einen ersten abgewinkelten Abschnitt und benachbart zur zweiten Scheibenkontaktfläche einen zweiten abgewinkelten Abschnitt auf. Der erste abgewinkelte Abschnitt nimmt einen Winkel α von 120° bis 150° zur benachbarten ersten Scheibenkontaktfläche ein, während der zweite abgewinkelte Abschnitt einen Winkel α von 120° bis 150° zur benachbarten zweiten Scheibenkontaktfläche einnimmt. Die zwischen den beiden abgewinkelten Abschnitten der Außenfläche verlaufende Außenfläche, die parallel zur Verglasungsinnenraumfläche verläuft, ist in einem Winkel β von 87° bis 93° zur ersten Scheibenkontaktfläche und zur zweiten Scheibenkontaktfläche angeordnet. Die Scheibenkontaktflächen laufen dabei parallel zueinander. Demnach nehmen die Scheibenkontaktflächen entweder beide einen Winkel β von 90° zur Verglasungsinnenraumfläche ein oder weichen beide um den gleichen Betrag mit umgekehrtem Vorzeichen von 90° ab. In solch einem Fall nimmt beispielsweise eine Scheibenkontaktfläche einen Winkel von 89,5° und die andere Scheibenkontaktfläche einen Winkel von 90,5° zur Verglasungsinnenraumfläche ein. Die Scheibenkontaktflächen bilden mit der Verglasungsinnenraumfläche sowie mit den abgewinkelten Abschnitten der Außenflächen Ecken aus, an denen die Scheibenkontaktflächen mit der Verglasungsinnenraumfläche beziehungsweise mit den abgewinkelten Abschnitten der Außenfläche zusammenstoßen. Analog dazu sind auch Ecken zwischen den abgewinkelten Abschnitten der Außenfläche und der dazwischenliegenden restlichen Außenfläche vorhanden. An den Ecken liegt jeweils ein Radius, in dem die Ecken abgerundet sind. Dabei ist zu unterscheiden zwischen den innerhalb der Hohlkammer befindlichen, als hohlkammerinnenseitig bezeichneten, Ecken und den der Hohlkammer abgewandten außenseitigen Ecken. Erfindungsgemäß ist jede hohlkammerinnenseitige Ecke, die zwischen einem abgewinkelten Abschnitt der Außenfläche und der jeweils benachbarten Scheibenkontaktfläche ausgebildet ist, mit einem Radius R₁ von 1,5 mm bis 2,5 mm abgerundet. Ferner ist jede hohlkammerinnenseitige Ecke, die zwischen dem ersten abgewinkelten Abschnitt und der Außenfläche sowie zwischen dem zweiten abgewinkelten Abschnitt und der Außenfläche ausgebildet ist, mit einem Radius R₂ von 1,5 mm bis 2,5 mm abgerundet. Die hohlkammerinnenseitigen Ecken, die zwischen der Verglasungsinnenraumfläche und der ersten Scheibenkontaktfläche sowie zwischen der Verglasungsinnenraumfläche und der zweiten Scheibenkontaktfläche ausgebildet sind, sind mit einem Radius R₃ von 1,3 mm bis 1,7 mm abgerundet.

Der Grundkörper des Abstandhalters weist eine Hohlkammer auf, die sich entlang des Grundkörpers erstreckt, ist also als Hohlprofilabstandhalter ausgestaltet. An der Innenseite des Hohlprofilabstandhalters, also an der die Hohlkammer begrenzenden inneren Oberfläche des Abstandhalters werden die Ecken der Grundkörperwand als hohlkammerinnenseitige Ecken bezeichnet. So stoßen in allen Bereichen der Wandung, in denen sich die Steigung der Abstandhalterwand ändert, die benachbarten Abschnitte der Grundkörperwand in Form einer Ecke zusammen. Die innenliegenden Ecken werden dabei als holkammerinnenseitige Ecken und die außenliegenden, in Richtung der äußeren Umgebung weisenden, Ecken als äußere Ecken bezeichnet. Jede hohlkammerinnenseitige Ecke des Grundkörpers, die im Bereich eines abgewinkelten Abschnitts und der dazu benachbarten Scheibenkontaktfläche liegt, ist erfindungsgemäß in einem Radius R₁ von 1,5 mm bis 2,5 mm abgerundet. Weiter erfindungsgemäß sind auch die hohlkammerinnenseitigen Ecken zwischen der Außenfläche und den benachbarten abgewinkelten Abschnitten in einem Radius R₂ von 1,5 mm bis 2,5 mm abgerundet. Im Bereich der Verglasungsinnenraumfläche und der benachbarten Scheibenkontaktflächen liegen ebenfalls hohlkammerinnenseitige Ecken vor, die erfindungsgemäß mit einem Radius R₃ von 1,3 mm bis 1,7 mm abgerundet sind.

Der erfindungsgemäße Abstandhalter mit hohlkammerinnenseitigen abgerundeten Ecken weist eine wesentlich höhere mechanische Stabilität und verbesserte Brucheigenschaften im Vergleich zu bekannten Abstandhaltern auf. Darüber hinaus ist die Geometrie des Abstandhalters besonders gut geeignet in Verbindung mit geschäumten Grundkörpermaterialien. Auch bei ungeschäumten polymeren Abstandhaltern lässt sich eine Verbesserung der Stabilität erreichen. Durch Vergrößerung der Radien R₃, R₂ und/oder R₁ wird des Weiteren die Materialstärke im Bereich der Ecken erhöht, wodurch eine verbesserte Verschweißbarkeit des Abstandhalters gewährleistet wird.

In Versuchen der Erfinder hat sich gezeigt, dass der Radius R₃ den größten Einfluss auf die mechanischen Eigenschaften des Abstandhalters hat. Eine wesentliche Verbesserung der mechanischen Eigenschaften des Abstandhalters ist bereits zu beobachten, wenn der Radius R₃ zwischen 1,0 mm und 2,5 mm gewählt wird. Dies trifft auch zu, wenn die Radien R₁ und R₂ unabhängig von R₃ innerhalb des wesentlich größeren Bereiches von 0,4 mm bis 2,5 mm gewählt werden und auch vergleichsweise kleine Radien annehmen können. Die Anpassung der Radien R₁ und R₂ führt zu einer Angleichung der Massebilanz an der Verglasungsinnenraumseite und der Außenseite des Abstandhalters. Dadurch kühlt der Abstandhalter im Herstellungsprozess nach Extrusion oben wie unten gleichermaßen ab, wodurch eine unterschiedliche Schwindung vermieden und einem unterschiedlichen Verzug, der zur Krümmung der Abstandhalterprofile führt, entgegengewirkt werden kann. Dem beschriebenen Effekt kann man aber auch auf andere Weise entgegenwirken, sodass die Radien R₁ und R₂ nicht zwangsläufig im gleichen Maße verändert werden müssen wie der Radius R₃.

Die Verglasungsinnenraumfläche ist als die Fläche des Abstandhaltergrundkörpers definiert, die nach Einbau des Abstandhalters in einer Isolierverglasung in Richtung des Innenraums der Verglasung weist. Die Verglasungsinnenraumfläche liegt dabei zwischen der ersten und der zweiten Scheibe.

Die Außenfläche des Abstandhaltergrundkörpers ist die der Verglasungsinnenraumfläche gegenüberliegende Seite, die vom Innenraum der Isolierverglasung weg in Richtung einer äußeren Versiegelung weist. Die Verglasungsinnenraumfläche und die Außenfläche verlaufen, mit Ausnahme der abgewinkelten Abschnitte, vorzugsweise im Wesentlichen parallel zueinander.

Die erste Scheibenkontaktfläche und die zweite Scheibenkontaktfläche stellen die Flächen des Abstandhalters dar, die der Montage der Scheiben einer Isolierverglasung dienen. Die erste Scheibenkontaktfläche und die zweite Scheibenkontaktfläche sind im Wesentlichen parallel zueinander.

Die Hohlkammer des Grundkörpers grenzt an die Verglasungsinnenraumfläche, wobei die Verglasungsinnenraumfläche sich oberhalb der Hohlkammer befindet und die Außenfläche des Abstandhalters sich unterhalb der Hohlkammer befindet. Oberhalb ist in diesem Zusammenhang als im Einbauzustand des Abstandhalters in einer Isolierverglasung dem inneren Scheibenzwischenraum der Isolierverglasung zugewandt und unterhalb als dem Scheibeninnenraum abgewandt definiert.

Die Hohlkammer des Abstandhalters führt zu einer Gewichtsreduktion im Vergleich zu einem massiv ausgeformten Abstandhalter und steht zur Aufnahme von weiteren Komponenten, wie beispielsweise eines Trockenmittels, zur Verfügung.

In einer bevorzugten Ausführungsform der Erfindung weisen der erste abgewinkelte Abschnitt und der zweite abgewinkelte Abschnitt jeweils einen Winkel α von 130° bis 140° zur jeweils benachbarten Scheibenkontaktfläche ein. Dies ist vorteilhaft zur weiteren Verbesserung der mechanischen Stabilität des Abstandhalters. Vorzugsweise nimmt der Winkel α zwischen erstem abgewinkeltem Abschnitt und Scheibenkontaktfläche den gleichen Wert an wie der Winkel α zwischen zweitem abgewinkeltem Abschnitt und Scheibenkontaktfläche. Eine solche symmetrische Ausgestaltung führt zu weiteren Stabilitätsvorteilen.

Erfindungsgemäß sind die hohlkammerinnenseitigen Ecken, die zwischen erstem abgewinkeltem Abschnitt und Außenfläche sowie zweitem abgewinkeltem Abschnitt und Außenfläche ausgeformt sind jeweils mit einem Radius R₂ von 1,5 mm bis 2,5 mm abgerundet. Dadurch wird die Festigkeit in den Ecken des Abstandhalters erhöht und durch entsprechende Anpassung der Radien ein gleichmäßigeres Abkühlverhalten erreicht. Der Unterschied zwischen den Spannungen im oberen und unteren Bereich des Abstandhalters kann auf diese Weise weiter verringert werden.

Die Verglasungsinnenraumfläche nimmt mit der ersten Scheibenkontaktfläche und der zweiten Scheibenkontaktfläche vorzugsweise jeweils einen Winkel β von jeweils 89,5° bis 90,5° ein. Insbesondere ist der Winkel β im Rahmen der üblichen Produktionsschwankungen genau 90°. Die hohlkammerinnenseitigen Ecken im Bereich der Verglasungsinnenraumfläche und der ersten Scheibenkontaktfläche sowie im Bereich der Verglasungsinnenraumfläche und der zweiten Scheibenkontaktfläche sind erfindungsgemäß jeweils mit einem Radius R₃ von 1,3 mm bis 1,7 mm abgerundet. In diesen Bereichen tritt eine besonders vorteilhafte Minimierung von Spannungen auf.

Die außenseitigen Ecken des Abstandhalters können optional ebenfalls abgerundet sein. Der Einfluss dessen auf die mechanische Stabilität des Abstandhalters ist im Vergleich zur Ausführung der hohlkammerinnenseitigen Ecken zwar geringer, jedoch ist auch durch diese Maßnahme eine Verbesserung zu erzielen. Zusätzlich dazu tragen die abgerundeten außenseitigen Ecken zu einer vereinfachten Herstellung des Abstandhalters in einem Formwerkzeug bei. Die außenseitigen Ecken in den Bereichen zwischen den abgewinkelten Abschnitten und der Außenfläche sowie zwischen den abgewinkelten Abschnitten und den jeweils benachbarten Scheibenkontaktflächen sind dabei bevorzugt mit einem Radius R₅ von 0,125 mm bis 0,7 mm, bevorzugt 0,3 mm bis 0,7 mm abgerundet.

Es konnte festgestellt werden, dass ein weiterer Einfluss auf die mechanischen Eigenschaften des Abstandhalters in der Höhe der Scheibenkontaktflächen liegt. In einer bevorzugten Ausführungsform beträgt die Höhe der Scheibenkontaktflächen zwischen 55 % und 80 %, bevorzugt zwischen 60 % und 75 %, der Gesamthöhe des Abstandhalters. Dieser, im Vergleich zu nach dem Stand der Technik bekannten Abstandhaltern, vergleichsweise hohe Anteil an der Gesamthöhe ist vorteilhaft hinsichtlich seiner Stabilität, sowie einer sicheren Verklebung der Scheiben einer Isolierverglasung an den Scheibenkontaktflächen. Darüber hinaus wird die Höhe des Abstandhalters, innerhalb derer eine abgewinkelte Form vorliegt, dadurch reduziert. Somit wird das Volumen der Hohlkammer des Abstandhalters vergrößert, so dass vergleichsweise mehr Abstandhaltervolumen zur Aufnahme von Trockenmittel zur Verfügung steht.

Die Höhe des Abstandhalters wird bestimmt als maximale Höhe des Abstandhalters zwischen Verglasungsinnenraumfläche und Außenfläche. Die Höhe des Abstandhalters beträgt bevorzugt 5,0 mm bis 10,0 mm, besonders bevorzugt 6,0 mm bis 8,0 mm, insbesondere 6,5 mm bis 7,0 mm. Innerhalb dieser Bereiche wird eine gute Stabilität des Abstandhalters und eine sichere Verklebung der Scheiben an den Scheibenkontaktflächen erreicht.

Die Breite des Abstandhalters wird als maximale Ausdehnung des Abstandhalters zwischen den gegenüberliegenden Scheibenkontaktflächen definiert. Die Breite des Abstandhalters hängt wesentlich von den gewünschten Scheibenzwischenräumen der herzustellenden Isolierverglasung ab. Die Breite des Abstandhalters beträgt typischerweise beträgt 4 mm bis 30 mm, bevorzugt 8 mm bis 16 mm.

Bevorzugt liegt die Wandstärke des Grundkörpers zwischen 0,5 mm und 1,5 mm, besonders bevorzugt zwischen 0,8 mm und 1,2 mm. In diesen Bereichen wird eine gute Stabilität erreicht. Gleichzeitig wird der Materialverbrauch möglichst gering gehalten.

In der Verglasungsinnenraumfläche ist bevorzugt eine Perforationsnut eingebracht, die im Wesentlichen parallel zu den Scheibenkontaktflächen verläuft. Die Perforationsnut stellt eine Vertiefung in der Verglasungsinnenraumfläche dar, das heißt die Perforationsnut ist von der Verglasungsinnenraumfläche in Richtung der Hohlkammer um die Tiefe der Perforationsnut versetzt. Die Perforationsnut weist bevorzugt eine Tiefe von 0,05 mm bis 0,5 mm, besonders bevorzugt 0,07 mm bis 0,25 mm, beispielsweise 0,10 mm auf. Die Perforationsnut ist dabei bevorzugt mit einem Radius R₄ von 0,20 mm bis 0,50 mm, besonders bevorzugt 0,30 mm bis 0,40 mm, beispielsweise 0,36 mm gerundet. Eine solche flache und abgerundete Geometrie der Perforationsnut führt zu vorteilhaft minimierten mechanischen Spannungen im Bereich der Perforationsnut.

Innerhalb der Perforationsnut sind mehrere Öffnungen in der Verglasungsinnenraumfläche eingebracht, wobei im Bereich der Öffnungen ein unmittelbarer Durchgang zwischen der Hohlkammer und dem Bereich oberhalb der Verglasungsinnenraumfläche besteht. Im Einbauzustand des Abstandhalters in einer Isolierverglasung verbinden die Öffnungen den Innenraum der Hohlkammer mit dem Verglasungsinnenraum, wodurch ein Gasaustausch zwischen diesen möglich wird. Dadurch wird eine Aufnahme von Luftfeuchtigkeit durch ein in der Hohlkammer befindliches Trockenmittel erlaubt und somit ein Beschlagen der Scheiben verhindert. Die Öffnungen sind bevorzugt als Schlitze ausgeführt, besonders bevorzugt als Schlitze mit einer Breite von 0,1 mm bis 0,3 mm, beispielsweise 0,2 mm, und einer Länge von 1,5 mm bis 3,5 mm, beispielsweise 2 mm. Die Schlitze gewährleisten einen optimalen Luftaustausch ohne dass Trockenmittel aus der Hohlkammer in den inneren Scheibenzwischenraum eindringen kann. Die Gesamtzahl der Öffnungen hängt dabei von der Größe der Isolierverglasung ab.

Der polymere Grundkörper enthält bevorzugt Polyethylen (PE), Polycarbonate (PC), Polypropylen (PP), Polystyrol, Polybutadien, Polynitrile, Polyester, Polyurethane, Polymethylmetacrylate, Polyacrylate, Polyamide, Polyethylenterephthalat (PET), Polybutylenterephthalat (PBT), bevorzugt Acrylnitril-Butadien-Styrol (ABS), Acrylester-Styrol-Acrylnitril (ASA), Acrylnitril-Butadien-Styrol/Polycarbonat (ABS/PC), Styrol-Acrylnitril (SAN), PET/PC, PBT/PC und/oder Copolymere oder Gemische davon. Mit diesen Materialien werden gute Ergebnisse hinsichtlich der mechanischen Stabilität erzielt.

In einer besonders bevorzugten Ausführungsform des Abstandhalters umfasst der Grundkörper ein thermoplastisches Polymer. Als thermoplastisches Polymer des Grundkörpers kommen beispielsweise Polyethylen (PE), Polystyrol, Polyethylenterephthalat (PET), Polypropylen (PP), Styrol-Acrylnitril (SAN), oder Copolymere oder Gemische davon in Frage. Als insbesondere vorteilhaft hinsichtlich der mechanischen Eigenschaften des Grundkörpers hat sich die Verwendung styrolbasierter thermoplastischer Polymer als Grundmaterial erwiesen. Ein insbesondere geeignetes thermoplastisches Polymer ist Styrol-Acrylnitril (SAN).

Der polymere Grundkörper ist bevorzugt ein geschäumter Grundkörper, der eine Porenstruktur aufweist. Eine Porenstruktur ist eine Struktur mit regelmäßigen Hohlräumen, die mit Luft gefüllt sind.

Zum Aufschäumen von Kunststoffschmelzen, wie der Polymerschmelze zur Extrusion des polymeren Grundkörpers, sind verschiedene Verfahren bekannt, die sich in physikalische, mechanische und chemische Verfahren untergliedern lassen. Bei physikalischen und mechanischen Verfahren wird ein Gas allein mittels physikalischer oder mechanischer Methoden in die Polymerschmelze eingearbeitet. Chemische Schäumverfahren basieren hingegen auf der Zersetzung eines Treibmittels durch Wärmezufuhr, wodurch ein flüchtiger gasförmiger Bestandteil des Treibmittels abgespalten wird. Der in der Schmelze entstehende feinverteilte gasförmige Bestandteil bewirkt das Aufschäumen der Polymerschmelze. Zur Herstellung des erfindungsgemäßen Abstandhalters werden bevorzugt Direktschäumverfahren verwendet. Zu den Direktschäumverfahren gehört die zur Herstellung des erfindungsgemäßen Abstandhalters bevorzugt verwendete Schaumextrusion, bei der das vom Treibmittel freigesetzte Gas eine Expansion des Kunststoffs beim Austreten aus einer Düse verursacht. Durch Schäumen während der Extrusion sind die Wände des Hohlprofils nicht mehr als Vollmaterial ausgebildet, sondern sind durchsetzt von Gasblasen, daher porenförmigen Hohlräumen. Die geschäumte Ausführung des Grundkörpers ist vorteilhaft hinsichtlich der thermischen Eigenschaften des Grundkörpers und bewirkt gleichzeitig eine Gewichtsreduktion. Bezüglich der Gewichtsreduktion werden dabei im Vergleich zu einem als Vollmaterial ausgeführten Grundkörper ungefähr 10 % bis 20 % des Gewichts eingespart. Die thermischen Eigenschaften werden durch die in den Hohlräumen eingeschlossenen Gase stark verbessert, wobei die in den Poren ruhenden Gase als thermischer Isolator wirken.

Bevorzugt ist der polymere Grundkörper durch chemisches Schäumen unter Zusatz eines Schäumungsmittels aufgeschäumt. Das Schäumungsmittel wird bevorzugt in Form eines Granulats umfassend ein Trägermaterial und ein Treibmittel eingesetzt. Das Treibmittel zersetzt sich bei Wärmezufuhr in einer endothermen Reaktion unter Abspaltung eines gasförmigen Stoffes, bevorzugt CO₂. Schäumungsmittel zum chemischen Schäumen von Kunststoffen sind dem Fachmann bekannt und kommerziell erhältlich. Das Trägermaterial ist in der Regel ein Polymergranulat, beispielsweise basierend auf Polypropylen, Ethylenvinylacetat (EVA), Ethylen-Butylacrylat-Copolymer (EBA), Polyethylen (PE), thermoplastischem Polystyrol (TPS) oder thermoplastischen Polyurethanen (TPU). Das granulatförmige Schäumungsmittel wird dem Polymergemisch in der Regel vor dem Aufschmelzen im Extruder zugegeben.

Das Schäumungsmittel ist bevorzugt in einer Menge von 0,5 Gew.-% bis 3,0 Gew.-%, besonders bevorzugt 0,5 Gew.-% bis 2,0 Gew.-%, insbesondere 0,8 Gew.-% bis 1,2 Gew.-% zum Polymergemisch des polymeren Grundkörpers zugesetzt. Diese geringen Mengen sind ausreichend um die gewünschte Porosität des Grundkörpers zu erhalten.

Der polymere Grundkörper umfasst bevorzugt geschlossenzellige Poren. Die Porengröße beträgt bevorzugt 10 µm bis 100 µm, besonders bevorzugt von 20 µm bis 80 µm, insbesondere von 30 µm bis 70 µm. Innerhalb dieser Porengrößen ist sowohl eine vorteilhafte Reduzierung der Wärmeleitfähigkeit als auch eine gute mechanische Stabilität des Grundkörpers zu erreichen.

Der geschäumte polymere Grundkörper ist bevorzugt aus einem thermoplastischen Polymer als Grundmaterial gefertigt, wobei insbesondere Polyethylen (PE), Polystyrol, Polyethylenterephthalat (PET), Polypropylen (PP), Styrol-Acrylnitril (SAN), oder Copolymere oder Gemische davon vorteilhaft sind.

Die in Gewichtsprozent gegebenen Anteile der einzelnen Komponenten des Gemisches des polymeren Grundkörpers addieren sich zu 100 %, wobei auch andere als die genannten Komponenten anwesend sein können. Beispiele für solche weiteren Komponenten sind elastomere Zusätze, Verstärkungsmittel und Farbpigmente.

In einer bevorzugten Ausführungsform ist der Grundkörper aus einem thermoplastischen Polymer als Grundmaterial gefertigt, dem ein Verstärkungsmittel zugesetzt und/oder ein elastomerer Zusatz beigemischt sind.

Der Anteil des thermoplastischen Polymers als Grundmaterial des polymeren Grundkörpers beträgt zwischen 30,0 Gew.-% bis 70,0 Gew.-% und der Anteil des Verstärkungsmittels beträgt 20,0 Gew.-% bis 45,0 Gew.-%. Des Weiteren umfasst der polymere Grundkörper optional einen elastomeren Zusatz, der einer Verbesserung der elastischen Eigenschaften des Abstandhalters bewirkt. Als elastomerer Zusatz wird ein thermoplastisches Elastomer und/oder ein thermoplastisches Terpolymer mit elastomerer Komponente zugesetzt. Der elastomere Zusatz hat dabei einen Anteil von insgesamt 0,5 Gew.-% bis 20,0 Gew.-% an der Gesamtmasse des Grundkörpers. Innerhalb dieser Größenordnung kann eine wesentliche Verbesserung der elastischen Eigenschaften des Grundkörpers beobachtet werden. Dadurch werden die mechanischen Eigenschaften des Abstandhalters verbessert. Als insbesondere vorteilhaft für die mechanischen Eigenschaften des Abstandhalters hat sich ein Grundkörper mit erfindungsgemäßer Geometrie mit abgerundeten hohlkammerinnenseitigen Ecken in Kombination mit einem geschäumten thermoplastischen Polymer als Grundkörpermaterial, mindestens einem Verstärkungsmittel und mindestens einem elastomeren Zusatz erwiesen.

Bevorzugt sind dem Grundkörper ein thermoplastisches Elastomer oder ein thermoplastisches Terpolymer mit elastomerer Komponente als elastomerer Zusatz beigemischt. Thermoplastische Elastomere als elastomerer Zusatz werden bevorzugt in einem Anteil von 0,3 Gew.-% bis 5,0 Gew.-%, bevorzugt 0,3 Gew.-% bis 4,0 Gew.-% zugesetzt, während thermoplastische Terpolymere mit elastomerer Komponente in einem Anteil von 3,0 Gew.-% bis 20,0 Gew.-%, bevorzugt 4,0 Gew.-% bis 14,0 Gew.-% eingesetzt werden.

In einer bevorzugten Ausführungsform des erfindungsgemäßen Abstandhalters wird als elastomerer Zusatz ein thermoplastisches Elastomer aus der Gruppe der thermoplastischen Polyurethane (TPU) und/oder der Gruppe der thermoplastischen Styrolblockcopolymere (TPS) eingesetzt. Bei den thermoplastischen Elastomeren TPU und TPS genügt bereits ein Anteil von 0,3 Gew.-% bis 5,0 Gew.-% um die gewünschte Verbesserung der elastischen Eigenschaften zu bewirken. Besonders bevorzugt werden 0,5 Gew.-% bis 4,0 Gew.-%, insbesondere 1,5 Gew.-% bis 2,5 Gew.-% TPU und/der TPS zugesetzt. Diese geringen Mengen genügen bereits um eine hinreichende Elastizität zu erreichen, wobei in den bevorzugten Bereichen ein besseres optisches Erscheinungsbild der Oberfläche sowie eine bessere Stabilität der Polymerschmelze während der Herstellung des Grundkörpers erreicht wird.

In einer anderen bevorzugten Ausführungsform des erfindungsgemäßen Abstandhalters ist der elastomere Zusatz ein thermoplastisches Terpolymer mit elastomerer Komponente. Das thermoplastische Terpolymer stellt ein Copolymer aus mehreren Monomerkomponenten dar, wobei zumindest eine Monomerkomponente die elastischen Eigenschaften des elastomeren Zusatzes bewirkt. Die anderen Monomerkomponenten können beispielsweise so gewählt werden, dass eine gute Kompatibilität zum Grundmaterial des Abstandhalters gewährleistet ist.

Die thermoplastischen Terpolymere mit elastomerer Komponente werden bevorzugt in einem Anteil von 3,0 Gew.-% bis 20,0 Gew.-%, bevorzugt 4,0 Gew.-% bis 20,0 Gew.-%, besonders bevorzugt 4,0 Gew.-% bis 14,0 Gew.-%, zugesetzt. Diese Bereiche haben sich als besonders vorteilhaft hinsichtlich der resultierenden Elastizität des Grundkörpers erwiesen. Insbesondere ABS und/oder ASA als elastomere Zusätze sind diesbezüglich vorteilhaft.

Das thermoplastische Terpolymer ist bevorzugt als Acrylnitril-Butadien-Styrol-Copolymer (ABS) realisiert, dessen elastomere Komponente im Butadienanteil des Copolymers besteht. Als elastomerer Zusatz zum Grundkörper bewirkt ABS eine höhere Schlagzähigkeit und Elastizität des Materials.

ABS hat sich hinsichtlich der mechanischen Eigenschaften und der Elastizität als besonders wirkungsvoll erwiesen bei Verwendung von 4,0 Gew.-% bis 20,0 Gew.-%, besonders bevorzugt 4,5 Gew.-% bis 13,0 Gew.-%, insbesondere 6,0 Gew.-% bis 12,0 Gew.-% ABS im Grundkörper.

Eine weitere bevorzugte Ausführungsform der Erfindung umfasst einen Abstandhalter mit einem thermoplastischen Terpolymer mit elastomerer Komponente, wobei Acrylnitril-Styrol-Acrylat (ASA) als thermoplastisches Terpolymer verwendet wird. Als Acrylnitril-Styrol-Acrylat wird ein mit Acrylatkautschuk modifiziertes Styrol-Acrylnitril-Copolymer bezeichnet, wobei die elastomere Komponente im Sinne der Erfindung Acrylatkautschuk ist. Die Eigenschaften des ASA sind grundsätzlich denen des ABS ähnlich, wobei sich ähnliche Anteile als besonders vorteilhaft erwiesen haben. ASA wird dabei bevorzugt in einem Anteil von 4,0 Gew.-% bis 20 Gew.-%, besonders bevorzugt 4,5 Gew.-% bis 13,0 Gew.-%, insbesondere 6,0 Gew.-% bis 12,0 Gew.-% zugesetzt.

In einer besonders bevorzugten Ausführungsform des Abstandhalters wird für das Grundmaterial ein styrolbasiertes thermoplastisches Polymer gewählt, wobei der elastomere Zusatz zumindest kein Polypropylen, bevorzugt keine thermoplastischen Elastomere auf Olefinbasis (TPO) enthält. Es sich gezeigt, dass Gemische styrolbasierter thermoplastischer Polymere mit Polypropylen als elastomerem Zusatz Stabilitätsprobleme der Schmelze im Extrusionsprozess aufweisen. Ähnliche Effekte sind bei anderen thermoplastischen Elastomeren auf Olefinbasis zu erwarten, so dass diese Gruppe bei Auswahl des elastomeren Zusatzes bevorzugt vollständig gemieden werden sollte.

Als Verstärkungsmittel in polymeren Grundkörpern sind dem Fachmann die verschiedensten faser-, pulver-, oder plättchenförmige Verstärkungsmittel bekannt. Zu den pulver- und/oder plättchenförmigen Verstärkungsmitteln gehören beispielsweise Glimmer und Talkum. Besonders bevorzugt hinsichtlich mechanischer Eigenschaften sind Verstärkungsfasern, zu denen Glasfasern, Aramidfasern, Kohlenstofffasern, Keramikfasern oder Naturfasern zuzurechnen sind. Alternativen dazu sind auch gemahlene Glasfasern oder Glashohlkugeln. Diese Glashohlkugeln haben einen Durchmesser von 10 µm bis 20 µm und verbessern die Stabilität des polymeren Hohlprofils. Geeignete Glashohlkugeln sind unter dem Namen "3M^{™} Glass Bubbles" käuflich erhältlich. In einer möglichen Ausführungsform enthält der polymere Grundkörper sowohl Glasfasern als auch Glashohlkugeln. Eine Beimischung von Glashohlkugeln führt zu einer weiteren Verbesserung der thermischen Eigenschaften des Hohlprofils.

Besonders bevorzugt werden Glasfasern als Verstärkungsmittel eingesetzt, wobei diese in einem Anteil von 25 Gew.-% bis 40 Gew.-%, insbesondere in einem Anteil von 30 Gew.-% bis 35 Gew.-% zugesetzt sind. Innerhalb dieser Bereiche ist eine gute mechanische Stabilität und Festigkeit des Grundkörpers zu beobachten. Ferner ein Glasfasergehalt von 30 Gew.-% bis 35 Gew.-% gut kompatibel mit der in einer bevorzugten Ausführungsform auf der Außenfläche des Abstandhalters aufgebrachten mehrschichtigen Barrierefolie aus alternierenden polymeren Schichten und metallischen Schichten. Durch Anpassung des Wärmeausdehnungskoeffizienten des polymeren Grundkörpers und der Barrierefolie oder - beschichtung lassen sich temperaturbedingte Spannungen zwischen den unterschiedlichen Materialien und ein Abplatzen der Barrierefolie oder -beschichtung vermeiden.

Der Grundkörper umfasst bevorzugt eine gas- und dampfdichte Barrierefolie, die der Verbesserung der Gasdichtigkeit des Grundkörpers dient. Bevorzugt ist diese mindestens auf der Außenfläche des polymeren Grundkörpers, bevorzugt auf der Außenfläche und auf einem Teil der Scheibenkontaktflächen, aufgebracht. Die gas- und dampfdichte Barriere verbessert die Dichtigkeit des Abstandhalters gegen Gasverlust und Eindringen von Feuchtigkeit. Bevorzugt ist die Barriere auf etwa der Hälfte bis zwei Drittel der Scheibenkontaktflächen aufgebracht, kann aber auch entlang größerer Bereiche oder der gesamten Höhe der Scheibenkontaktflächen angebracht werden. Eine geeignete Barrierefolie ist beispielsweise in WO 2013/104507 A1 offenbart.

In einer bevorzugten Ausführungsform ist die gas- und dampfdichte Barriere auf der Außenfläche eines polymeren Abstandhalters als Folie ausgeführt. Diese Barrierefolie enthält mindestens eine polymere Schicht sowie eine metallische Schicht oder eine keramische Schicht. Dabei beträgt die Schichtdicke der polymeren Schicht zwischen 5 µm und 80 µm, während metallische Schichten und/oder keramische Schichten mit einer Dicke von 10 nm bis 200 nm eingesetzt werden. Innerhalb der genannten Schichtdicken wird eine besonders gute Dichtigkeit der Barrierefolie erreicht. Die Barrierefolie kann auf dem polymeren Grundkörper aufgebracht werden, beispielsweise geklebt werden. Alternativ kann die Folie mit dem Grundkörper zusammen co-extrudiert werden.

Besonders bevorzugt enthält die Barrierefolie mindestens zwei metallische Schichten und/oder keramische Schichten, die alternierend mit mindestens einer polymeren Schicht angeordnet sind. Die Schichtdicken der einzelnen Schichten sind bevorzugt wie im vorhergehenden Absatz beschrieben. Bevorzugt werden die außenliegenden Schichten dabei von einer metallischen Schicht gebildet. Die alternierenden Schichten der Barrierefolie können auf die verschiedensten nach dem Stand der Technik bekannten Methoden verbunden bzw. aufeinander aufgetragen werden. Methoden zur Abscheidung metallischer oder keramischer Schichten sind dem Fachmann hinlänglich bekannt. Die Verwendung einer Barrierefolie mit alternierender Schichtenabfolge ist besonders vorteilhaft im Hinblick auf die Dichtigkeit des Systems. Ein Fehler in einer der Schichten führt dabei nicht zu einem Funktionsverlust der Barrierefolie. Im Vergleich dazu kann bei einer Einzelschicht bereits ein kleiner Defekt zu einem vollständigen Versagen führen. Des Weiteren ist die Auftragung mehrerer dünner Schichten im Vergleich zu einer dicken Schicht vorteilhaft, da mit steigender Schichtdicke die Gefahr interner Haftungsprobleme ansteigt. Ferner verfügen dickere Schichten über eine höhere Leitfähigkeit, so dass eine derartige Folie thermodynamisch weniger geeignet ist.

Die polymere Schicht der Folie umfasst bevorzugt Polyethylenterephthalat, Ethylenvinylalkohol, Polyvinylidenchlorid, Polyamide, Polyethylen, Polypropylen, Silikone, Acrylonitrile, Polyacrylate, Polymethylacrylate und/oder Copolymere oder Gemische davon. Die metallische Schicht enthält bevorzugt Eisen, Aluminium, Silber, Kupfer, Gold, Chrom und/oder Legierungen oder Oxide davon. Die keramische Schicht der Folie enthält bevorzugt Siliziumoxide und/oder Siliziumnitride.

In einer alternativen bevorzugten Ausführungsform ist die gas- und dampfdichte Barriere bevorzugt als Beschichtung ausgeführt. Die Beschichtung enthält Aluminium, Aluminiumoxide und / oder Siliciumoxide und wird bevorzugt über ein PVD-Verfahren (physikalische Gasphasenabscheidung) aufgebracht. Die Beschichtung mit den genannten Materialien liefert besonders gute Ergebnisse im Hinblick auf Dichtigkeit und zeigt zusätzlich exzellente Haftungseigenschaften zu den in Isolierverglasungen verwendeten Materialien der äußeren Versiegelung.

In einer besonders bevorzugten Ausführungsform weist die gas- und dampfdichte Barriere mindestens eine metallische Schicht oder keramische Schicht auf, die als Beschichtung ausgeführt ist und Aluminium, Aluminiumoxide und / oder Siliciumoxide enthält und bevorzugt über ein PVD-Verfahren (physikalische Gasphasenabscheidung) aufgebracht ist.

Der beschriebene Abstandhalter umfassend eine erste Scheibenkontaktfläche und eine zweite Scheibenkontaktfläche ist sowohl für Doppel- als auch für Dreifach- und Mehrfachverglasungen geeignet. Dabei können zur Aufnahme mehrerer Scheiben sowohl weitere Abstandhalter eingesetzt werden, als auch ein in seiner Formgebung zur Aufnahme mehrerer Scheiben geeigneter Abstandhaltergrundkörper. In ersterem Fall werden zunächst eine erste und eine zweite Scheibe an den Scheibenkontaktflächen des Abstandhalters angebracht und daraufhin an einer der vom Abstandhalter wegweisenden Oberflächen der Scheiben weitere Abstandhalter angebracht, deren freiliegende Scheibenkontaktflächen weitere Scheiben aufnehmen. In der dazu alternativen Ausführungsform kann eine Dreifach- oder Mehrfachisolierverglasung auch mit einem Abstandhalter in Form eines Doppelabstandhalters ausgeführt sein. Ein solcher Doppelabstandhalter kann mindestens eine zusätzliche Scheibe in einer Nut aufnehmen. So weist ein Abstandhalter für Dreifachverglasungen eine Nut in der Verglasungsinnenraumfläche zwischen erster Scheibenkontaktfläche und zweiter Scheibenkontaktfläche auf, in der eine dritte Scheibe in zwischen der ersten Scheibe und der zweiten Scheibe eingesetzt wird. Die erste und die zweite Scheibe werden an der ersten und zweiten Scheibenkontaktfläche des Abstandhalters angebracht. Da die Nut zwischen der ersten Verglasungsinnenraumfläche und zweiten Verglasungsinnenraumfläche verläuft, begrenzt sie diese seitlich und trennt eine erste Hohlkammer und eine zweite Hohlkammer voneinander. Die Seitenflanken der Nut werden dabei von den Wänden der ersten Hohlkammer und der zweiten Hohlkammer gebildet. Derartige Abstandhaltergrundformen sind unter anderem aus WO 2014/198431 A1 bekannt.

Die Erfindung umfasst des Weiteren eine Isolierverglasung mit erfindungsgemäßem Abstandhalter. Die Isolierverglasung enthält mindestens eine erste Scheibe, eine zweite Scheibe und einen die Scheiben umfassenden umlaufenden erfindungsgemäßen Abstandhalter.

An die Verglasungsinnenraumfläche des Abstandhalters angrenzend befindet sich der Verglasungsinnenraum der Isolierverglasung. Die Außenfläche des Abstandhalters grenzt hingegen an den äußeren Scheibenzwischenraum. Die erste Scheibe ist dabei an der ersten Scheibenkontaktfläche des Abstandhalters und die zweite Scheibe an der zweiten Scheibenkontaktfläche des Abstandhalters angebracht.

Die erste und die zweite Scheibe sind an den Scheibenkontaktflächen bevorzugt über ein Dichtmittel angebracht, das zwischen der ersten Scheibenkontaktfläche und der ersten Scheibe und/oder der zweiten Scheibenkontaktfläche und der zweiten Scheibe angebracht ist.

Das Dichtmittel enthält bevorzugt Butylkautschuk, Polyisobutylen, Polyethylenvinylalkohol, Ethylenvinylacetat, Polyolefin-Kautschuk, Polypropylen, Polyethylen, Copolymere und/oder Gemische davon.

Das Dichtmittel ist bevorzugt in mit einer Dicke von 0,1 mm bis 0,8 mm, besonders bevorzugt 0,2 mm bis 0,4 mm in den Spalt zwischen Abstandhalter und Scheiben eingebracht.

Der äußere Scheibenzwischenraum der Isolierverglasung ist bevorzugt mit einer äußeren Abdichtung verfüllt. Diese äußere Abdichtung dient vor allem der Verklebung der beiden Scheiben und somit der mechanischen Stabilität der Isolierverglasung.

Die äußere Abdichtung enthält bevorzugt Polysulfide, Silikone, Silikonkautschuk, Polyurethane, Polyacrylate, Copolymere und/oder Gemische davon. Derartige Stoffe haben eine sehr gute Haftung auf Glas, so dass die äußere Abdichtung eine sichere Verklebung der Scheiben gewährleistet. Die Dicke der äußeren Abdichtung beträgt bevorzugt 2 mm bis 30 mm, besonders bevorzugt 5 mm bis 10 mm.

In einer besonders bevorzugten Ausführungsform der Erfindung umfasst die Isolierverglasung mindestens drei Scheiben, wobei an die erste Scheibe und/oder die zweite Scheibe ein weiterer Abstandhalterrahmen angebracht ist, an dem die mindestens dritte Scheibe befestigt ist. In einer alternativen Ausführungsform umfasst die Isolierverglasung einen Doppelabstandhalter mit Nut, in dessen Nut die dritte Scheibe eingesetzt ist. Die erste und die zweite Scheibe liegen an den Scheibenkontaktflächen an.

Die erste Scheibe, die zweite Scheibe und/oder die dritte Scheibe der Isolierverglasung enthalten bevorzugt Glas, besonders bevorzugt Quarzglas, Borosilikatglas, Kalk-Natron-Glas und/oder Gemische davon. Die erste und/oder zweite Scheibe der Isolierverglasung können auch thermoplastische polymere Scheiben umfassen. Thermoplastische polymere Scheiben umfassen bevorzugt Polycarbonat, Polymethylmethacrylat und/oder Copolymere und/oder Gemische davon. Darüberhinausgehende Scheiben der Isolierverglasung können die gleiche Zusammensetzung haben wie für die erste, zweite und dritte Scheibe erwähnt.

Die erste Scheibe und die zweite Scheibe verfügen über eine Dicke von 2 mm bis 50 mm, bevorzugt 2 mm bis 10 mm, besonders bevorzugt 4 mm bis 6 mm, wobei beide Scheiben auch unterschiedliche Dicken haben können.

Die erste Scheibe, die zweite Scheibe und weitere Scheiben können aus Einscheibensicherheitsglas, aus thermisch oder chemisch vorgespanntem Glas, aus Floatglas, aus extraklarem eisenarmem Floatglas, gefärbtem Glas, oder aus Verbundsicherheitsglas enthaltend eine oder mehrere dieser Komponenten ausgeführt sein. Die Scheiben können beliebige weitere Komponenten oder Beschichtungen, beispielsweise Low-E-Schichten oder anderweitige Sonnenschutzbeschichtungen, aufweisen.

Der äußere Scheibenzwischenraum, begrenzt durch erste Scheibe, zweite Scheibe und Außenfläche des Abstandhalters, ist zumindest teilweise, bevorzugt vollständig, mit einer äußeren Versiegelung verfüllt. Dadurch wird eine sehr gute mechanische Stabilisierung des Randverbunds erzielt.

Bevorzugt enthält die äußere Versiegelung Polymere oder silanmodifizierte Polymere, besonders bevorzugt organische Polysulfide, Silikone, raumtemperaturvernetzenden (RTV) Silikonkautschuk, peroxidischvernetzten Silikonkautschuk und/oder additions-vernetzten Silikonkautschuk, Polyurethane und/oder Butylkautschuk.

Das Dichtmittel zwischen der ersten Scheibenkontaktfläche und der ersten Scheibe, beziehungsweise zwischen der zweiten Scheibenkontaktfläche und der zweiten Scheibe, enthält bevorzugt ein Polyisobutylen. Das Polyisobutylen kann ein vernetzendes oder nicht vernetzendes Polyisobutylen sein.

Die Isolierverglasung ist optional mit einem Schutzgas, bevorzugt mit einem Edelgas, vorzugsweise Argon oder Krypton befüllt, die den Wärmeübergangswert im Isolierverglasungszwischenraum reduzieren.

Grundsätzlich sind verschiedenste Geometrien der Isolierverglasung möglich, beispielsweise rechteckige, trapezförmige und abgerundete Formen. Zur Herstellung runder Geometrien kann der Abstandhalter beispielsweise im erwärmten Zustand gebogen werden.

An den Ecken der Isolierverglasung sind die Abstandhalter beispielsweise über Eckverbinder miteinander verknüpft. Derartige Eckverbinder können beispielsweise als Kunststoffformteil mit Dichtung ausgeführt sein, in dem zwei Abstandhalter zusammenstoßen.

Alternativ dazu können die Abstandhalter an den Ecken auch unmittelbar miteinander verbunden werden, beispielsweise durch verschweißen der im Eckbereich aneinandergrenzenden Abstandhalter. Beispielsweise werden die Abstandhalter auf 45° Gärung zugeschnitten und durch Ultraschallschweißen miteinander verbunden.

In einer weiteren bevorzugten Ausführungsform wird der Abstandhalter an den Ecken der Verglasung nicht zertrennt und im erforderlichen Winkel über Eckverbinder verbunden, sondern wird unter Erwärmung in die entsprechende Eckgeometrie gebogen.

Ein bevorzugtes Verfahren zur Herstellung eines erfindungsgemäßen Abstandhalters das vom Wortlaut der Ansprüche nicht erfasst wird, umfasst die Schritte:
a) Bereitstellen eines Polymergemisches zur Herstellung eines Grundkörpers, bevorzugt zumindest umfassend ein thermoplastisches Polymer als Grundmaterial, optional darüber hinaus umfassend zumindest einen elastomeren Zusatz, ein Verstärkungsmittel und/oder ein Schäumungsmittel,
b) Schmelzen des Gemisches in einem Extruder bei einer Temperatur von 200 °C bis 240 °C,
c) optional: Zersetzung des Schäumungsmittels unter Temperatureinwirkung,
d) Austritt der Schmelze aus dem Extruder durch ein Formwerkzeug und Formen eines Abstandhaltergrundkörpers,
e) Stabilisieren des Abstandhalters und
f) Abkühlen des Abstandhalters.

Die polymeren Komponenten des Gemisches in Schritt a) werden bevorzugt in Form von Granulaten bereitgestellt. Dies gilt insbesondere für ein thermoplastisches Polymer als Grundmaterial und einen elastomeren Zusatz. Dadurch sind diese gut dosierbar und einfach zu handhaben. Das Verstärkungsmittel liegt in Faser- oder Kugelform vor, ist also ebenfalls einfach dosierbar. Das Verstärkungsmittel kann auch bereits mit dem thermoplastischen Polymer gemeinsam bereitgestellt werden. Solche Mischungen aus thermoplastischem Polymer mit darin enthaltenem definierten Anteil an Verstärkungsmittel sind kommerziell erhältlich. Geeignete Schäumungsmittel können in Form eines Granulats umfassend ein Trägermaterial und ein Treibmittel kommerziell erworben werden. Das Treibmittel ist auf der Oberfläche des granulatförmigen Trägermaterials aufgebracht. Die Konzentration des Treibmittels auf dem Trägermaterial kann variieren und beträgt häufig zwischen 15 Gew.-% bis 30 Gew.-%, beispielsweise 20 Gew.-% oder 25 Gew.-%. Wird ein Schäumungsmittel verwendet, so findet in Schritt c) beim Austritt der Schmelze durch das Formwerkzeug ein Aufschäumen der Schmelze statt, wodurch sich Poren im Abstandhalter ausbilden.

Bevorzugt umfasst das in Schritt a) bereitgestellte Gemisch Farbpigmente und/oder Additive, besonders bevorzugt zumindest Farbpigmente. Die Farbpigmente werden dabei in Form eines polymergebundenen Farbpigments bereitgestellt, in dem das Farbpigment mit dem verwendeten thermoplastischen Grundmaterial des Abstandhalters in Form eines Granulats verpresst sind. Diese umgangssprachlich auch als Farb-Masterbatch bezeichneten Granulate verbessern die Dosierbarkeit der Farbpigmente und erhöhen die technische Prozesssicherheit im Verarbeitungsprozess. Ein polymergebundenes Farbpigment wird optional und je nach gewünschter Farbgebung in einem Anteil von 1,0 Gew.-% bis 4,0 Gew.-% dem Gemisch in Schritt a) zugefügt.

In einer bevorzugten Ausführungsform des Verfahrens, wird in Schritt a) Styrol-Acrylnitril als Grundmaterial verwendet, während der elastomere Zusatz ein thermoplastisches Elastomer aus der Gruppe der thermoplastischen Polyurethane (TPU) und/oder der Gruppe der thermoplastischen Styrolblockcopolymere (TPS) ist und in einem Anteil von 0,3 Gew.-% bis 5 Gew.-% zugesetzt ist. Besonders bevorzugt ist das Gemisch aus thermoplastischem Polymer als Grundmaterial mit einem Anteil von 30 Gew.-% bis 70 Gew.-%, elastomerem Zusatz mit einem Anteil von 0,3 Gew.-% bis 5 Gew.-% und Glasfasern als Verstärkungsmittel mit einem Anteil von 30 Gew.-% bis 40 Gew.-% zusammengesetzt. Das Schäumungsmittel wird in einem Anteil von 0,5 Gew.-% bis 2 Gew.-% zugesetzt. Dieses Gemisch zeigt bei Aufschmelzen im Extruder eine gute Kompatibilität der Komponenten zueinander und eine gute Prozessstabilität.

In einer weiteren Ausführungsform des Verfahrens wird in Schritt a) Styrol-Acrylnitril als Grundmaterial verwendet, wobei der elastomere Zusatz Acrylnitril-Butadien-Styrol-Copolymer (ABS) und/oder Acrylnitril-Styrol-Acrylat (ASA) ist und in einem Anteil von 4,0 Gew.-% bis 20,0 Gew.-% zugesetzt ist. Bevorzugt wird ein Gemisch aus SAN als thermoplastischem Grundmaterial mit einem Anteil von 30 Gew.-% bis 70 Gew.-%, elastomerem Zusatz mit einem Anteil von 4,0 Gew.-% bis 20,0 Gew.-% und Glasfasern als Verstärkungsmittel mit einem Anteil von 30 Gew.-% bis 40 Gew.-% eingesetzt. Das Schäumungsmittel wird in einem Anteil von 0,5 Gew.-% bis 2,0 Gew.-% zugesetzt.

Eine bevorzugte Ausgestaltung ist ein Verfahren, wobei das Gemisch in einem Extruder bei einer Temperatur von 200°C bis 240°C, bevorzugt 215 °C bis 220 °C, geschmolzen wird. Bei diesen Schmelztemperaturen werden sehr gute Ergebnisse hinsichtlich der Porenstruktur des aufgeschäumten Abstandhalters erhalten.

Bevorzugt wir die Schmelze unter Verwendung eines sich unter Temperatureinwirkung endotherm zersetzenden Schäumungsmittels unter Freisetzung von CO₂ aufgeschäumt.

Zum Formen des Grundkörpers wird die Schmelze bevorzugt mittels einer Schmelzpumpe durch ein Formwerkzeug zu einem Hohlprofil geformt. Die Stabilisierung des Grundkörpers erfolgt anhand des noch nicht erstarrten Grundkörperprofils mittels eines Vakuumkalibrierwerkzeugs. Dadurch wird die Geometrie des Grundkörpers gesichert. Der Grundkörper wird anschließend bevorzugt durch ein Kühlbad geleitet und ungefähr auf Raumtemperatur abgekühlt.

In einer bevorzugten Ausführungsform wird eine gas- und dampfdichte Barrierefolie auf der Außenseite des Grundkörpers angebracht. Bevorzugt wird diese mit dem Grundkörper coextrudiert oder verklebt, besonders bevorzugt verklebt.

Der mittels des beschriebenen Verfahrens hergestellte Abstandhalter kann dabei in einem Verfahren zur Herstellung einer Isolierverglasung eingesetzt werden. Ein solches Verfahren umfasst mindestens die Schritte:
g) Bereitstellung erfindungsgemäßer Abstandhalter,
h) Zusammenfügen eines Abstandhalterrahmens aus erfindungsgemäßen Abstandhaltern,
i) Anbringen einer ersten Scheibe an der ersten Scheibenkontaktfläche des Abstandhalterrahmens über ein Dichtmittel, Anbringen einer zweiten Scheibe an der zweiten Scheibenkontaktfläche des Abstandhalterrahmens über ein Dichtmittel,
j) optional: Anbringen mindestens eines weiteren Abstandhalterrahmens an der ersten Scheibe und/oder der zweiten Scheibe und Anbringen einer dritten und gegebenenfalls weiterer Scheiben an den weiteren Abstandhalterrahmen,
k) Verpressen der Scheibenanordnung,
l) Einbringen einer äußeren Abdichtung in den äußeren Scheibenzwischenraum.

Die Verklebung der Scheiben an den Scheibenkontaktflächen gemäß Schritt i) kann in einer beliebigen Reihenfolge durchgeführt werden. Optional kann die Verklebung beider Scheiben an den Scheibenkontaktflächen auch gleichzeitig erfolgen.

In Schritt I) wird der äußere Scheibenzwischenraum zumindest teilweise, bevorzugt vollständig, mit einer äußeren Abdichtung verfüllt. Die äußere Abdichtung wird bevorzugt direkt in den äußeren Scheibenzwischenraum hinein extrudiert, beispielsweise in Form einer plastischen Abdichtmasse.

Bevorzugt wird der Verglasungsinnenraum zwischen den Scheiben vor dem Verpressen der Anordnung (Schritt k)) mit einem Schutzgas gefüllt.

Die bezüglich eines Verfahrens zur Herstellung des erfindungsgemäßen Abstandhalters und eines Verfahrens zur Herstellung der erfindungsgemäßen Isolierverglasung

Im Folgenden wird die Erfindung anhand von Zeichnungen näher erläutert. Die Zeichnungen sind rein schematische Darstellungen und nicht maßstabsgetreu. Sie schränken die Erfindung in keiner Weise ein. Es zeigen:
Figur 1 eine schematische Darstellung des erfindungsgemäßen Abstandhalters im Querschnitt,
Figur 2a eine schematische Darstellung einer Isolierverglasung mit erfindungsgemäßem Abstandhalter im Querschnitt,
Figur 2b die Isolierverglasung gemäß Figur 2a in Draufsicht.

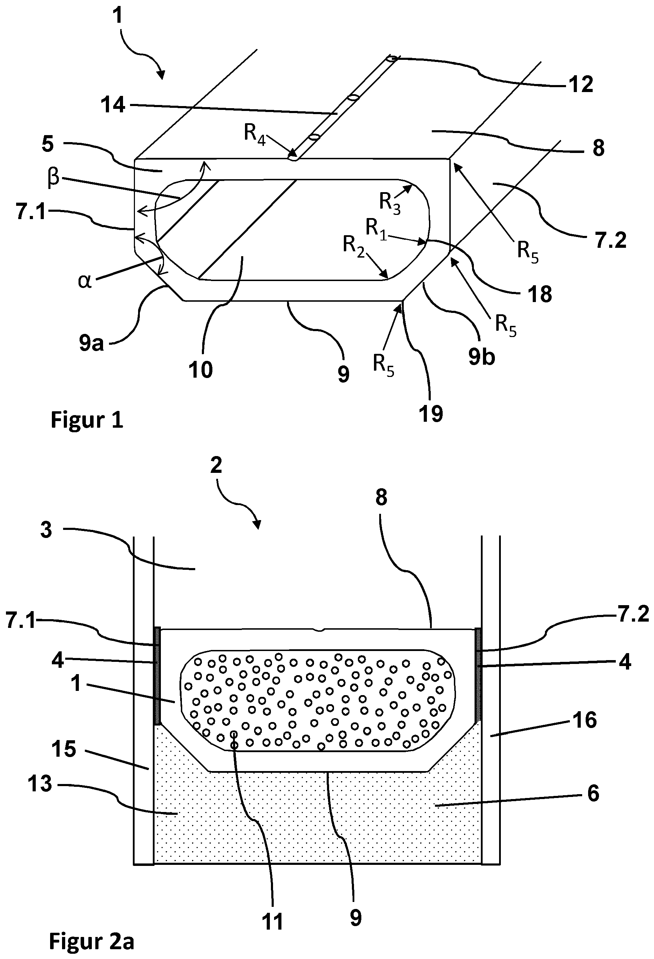

Figur 1 zeigt eine schematische Darstellung des erfindungsgemäßen Abstandhalters 1 umfassend einen polymeren Grundkörper 5 mit zwei Scheibenkontaktflächen 7.1 und 7.2, einer Verglasungsinnenraumfläche 8, einer Außenfläche 9 und einer Hohlkammer 10. Die Außenfläche 9 besitzt eine abgewinkelte Form, wobei die den Scheibenkontaktflächen 7.1 und 7.2 benachbarten abgewinkelten Abschnitte 9a, 9b der Außenfläche in einem Winkel von α=135° zu den Scheibenkontaktflächen 7.1 und 7.2 geneigt sind. Dies verbessert die Stabilität des Grundkörpers 5. Der Winkel zwischen den Scheibenkontaktflächen 7.1, 7.2 und der Verglasungsinnenraumfläche 8 beträgt jeweils β=90°. Auf der Außenfläche 9, den abgewinkelten Abschnitten der Außenfläche 9a, 9b und optional Teilbereichen der Scheibenkontaktflächen 7.1, 7.2 des Abstandhalters 1 ist eine wasser- und dampfdichte Barrierefolie (nicht gezeigt) aufgebracht, die den Wärmeübergang durch den polymeren Grundkörper 5 in den Verglasungsinnenraum einer Isolierverglasung vermindert. Die Barrierefolie weist drei polymere Schichten aus Polyethylenterephthalat mit einer Dicke von 12 µm und drei metallische Schichten aus Aluminium mit einer Dicke von 50 nm auf. Die metallischen Schichten und die polymeren Schichten sind dabei jeweils alternierend angebracht, wobei die im Einbauzustand des Abstandhalters dem äußeren Scheibenzwischenraum der Isolierverglasung zugewandte Schicht der Barrierefolie eine metallische Schicht ist. Die Barrierefolie ist mit dem Grundkörper 5 verklebt. Die Hohlkammer 10 ist geeignet um mit einem Trockenmittel gefüllt zu werden. Die Verglasungsinnenraumfläche 8 des Abstandhalters 1 weist Öffnungen 12 auf, die in regelmäßigen Abständen innerhalb einer Perforationsnut 14 umlaufend entlang der Verglasungsinnenraumfläche 8 angebracht sind um einen Gasaustausch zwischen dem Innenraum der Isolierverglasung und der Hohlkammer 10 zu ermöglichen. Somit wird eventuell vorhandene Luftfeuchtigkeit im Innenraum vom Trockenmittel 11 aufgenommen. Die Öffnungen 12 sind bevorzugt als Schlitze mit einer Breite von 0,2 mm und einer Länge von 2 mm ausgeführt. Die Materialstärke (Dicke) der Wandungen des Grundkörpers 5 ist umlaufend etwa gleich und beträgt beispielsweise 1 mm. Der Grundkörper weist eine Höhe von 6,85 mm und eine Breite von 15,30 mm auf. Die Scheibenkontaktflächen 7.1, 7.2 weisen eine Höhe von 4,313 mm auf und nehmen somit 63 % der Gesamthöhe des Abstandhalters 1 ein.

Das Gemisch, aus dem der Grundkörper 5 der Figur 1 extrudiert wurde, umfasst Styrol-Acrylnitril als thermoplastisches Grundmaterial mit einem Anteil von 30 Gew.-% bis 35 Gew.-% Glasfasern, 1,0 Gew.-% eines Schäumungsmittels und Farbpigmente. Der Grundkörper 5 weist Poren in einer Größe von 30 µm bis 70 µm auf. Der Grundkörper 5 wies eine gute mechanische Festigkeit, verminderte Wärmeleitfähigkeit und reduziertes Gewicht auf.

Die Erfindung wird im Folgenden anhand eines erfindungsgemäßen Beispiels und nicht erfindungsgemäßen Vergleichsbeispiels erläutert. Als erfindungsgemäßes Beispiel wird ein Abstandhalter nach Figur 1 verwendet. Als nicht erfindungsgemäßes Vergleichsbeispiel wird ein Abstandhalter verwendet, der in seinem Grundaufbau dem Abstandhalter der Figur 1 entspricht, Styrol-Acrylnitril als thermoplastisches Grundmaterial mit einem Anteil von 30 Gew.-% bis 35 Gew.-% Glasfasern und Farbpigmenten umfasst, jedoch im Unterschied zum erfindungsgemäßen Beispiel nicht geschäumt ist. Der Abstandhalter des Vergleichsbeispiels ist in einer ähnlichen Geometrie gefertigt wie der erfindungsgemäße Abstandhalter, wobei in Tabelle 1 die Geometrie des Abstandhalters gemäß erfindungsgemäßem Beispiel und nicht erfindungsgemäßem Vergleichsbeispiel im Vergleich zueinander gezeigt wird. Die Abmaße, die Winkel α und β sowie die Radien R₁, R₂ und R₃ mit denen die hohlkammerinnenseitigen Ecken 18 abgerundet sind, beziehungsweise Radius R₄, mit dem die Perforationsnut eingebracht ist, entsprechen dabei den in Figur 1 gezeigten.

**Tabelle 1**

| | **Beispiel** | **Vergleichsbeispiel** |
|---|---|---|
| Höhe [mm] | 6,85 | 6,50 |
| Höhe Scheibenkontaktflächen [mm] | 4,313 | 3,465 |
| Breite [mm] | 15,30 | 15,50 |
| α [°] | 135 | 135 |
| β [°] | 90 | 90 |
| R₁ [mm] | 2,00 | 0,50 |
| R₂ [mm] | 2,00 | 0,50 |
| R₃ [mm] | 1,60 | 0,40 |
| R₄ [mm] | 0,36 | 0,30 |
| Tiefe Perforationsnut [mm] | 0,10 | 0,30 |

Die Abstandhalter gemäß Beispiel und Vergleichsbeispiel wurden einer Seitendruckprüfung unterzogen, wobei an den gegenüberliegenden Scheibenkontaktflächen 7.1, 7.2 die Prüfbacken einer Presse anliegen und der Abstandhalter zusammengedrückt wird. Im Bereich der Radien R₁ und R₃ konnten die an den hohlkammerinnenseitigen Ecken auftretenden Belastungen um ungefähr 27 % reduziert werden. An der Perforationsnut 14 konnte die mechanische Belastung um 47 % gesenkt werden. Darüber hinaus werden in einer Seitendruckprüfung des erfindungsgemäßen Abstandhalters nach Beispiel auch höhere maximale Kräfte erzielt bevor es zum Bruch kommt. Der ungeschäumte Abstandhalter gemäß Vergleichsbeispiel erreicht dabei Maximalkräfte von > 1850 N. Wird dieser Abstandhalter des Vergleichsbeispiels als geschäumter Abstandhalter ausgeführt, so werden lediglich > 1500 N erreicht. Im Vergleich dazu hält der erfindungsgemäße Abstandhalter des Beispiels als geschäumter Abstandhalter Kräfte von > 2500 N aus, bevor es zum Bruch kommt. Gleichzeitig wird mittels des Abstandhalters des erfindungsgemäßen Beispiels eine Gewichtseinsparung von ungefähr 14 % erzielt. Ferner ermöglicht die Abstandhaltergeometrie gemäß erfindungsgemäßem Beispiel das Einbringen von 2,2 % mehr Trockenmittel in der Hohlkammer 10 des Abstandhalters gemäß Figur 1.

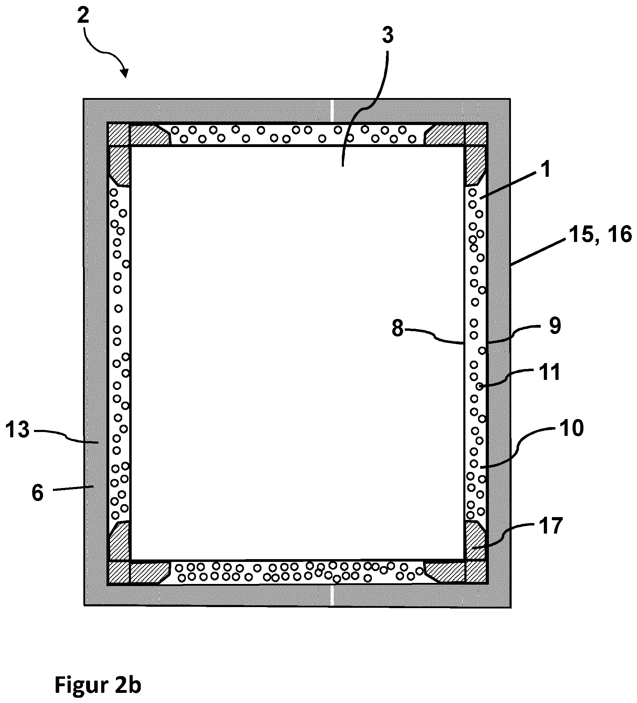

Figur 2a und 2b zeigen eine Isolierverglasung 2 mit dem erfindungsgemäßen Abstandhalter 1 gemäß Figur 1, wobei die gas- und dampfdichte Barrierefolie nicht im Detail gezeigt ist. In Figur 2a ist ein Querschnitt der Isolierverglasung 2 gezeigt, während Figur 2b eine Draufsicht darstellt. Figur 2b zeigt eine Gesamtansicht der Isolierverglasung 2 gemäß Figur 2a. Die Abstandhalter 1 sind an den Ecken der Isolierverglasung 2 über Eckverbinder 17 miteinander verbunden. Zwischen einer ersten Scheibe 15 und einer zweiten Scheibe 16 ist über ein Dichtmittel 4 umlaufend der erfindungsgemäße Abstandhalter 1 angebracht. Das Dichtmittel 4 verbindet dabei die Scheibenkontaktflächen 7.1 und 7.2 des Abstandhalters 1 mit den Scheiben 15 und 16. Die Hohlkammer 10 ist mit einem Trockenmittel 11 gefüllt. Als Trockenmittel 11 wird Molekularsieb eingesetzt. Der an die Verglasungsinnenraumfläche 8 des Abstandhalters 1 angrenzende Verglasungsinnenraum 3 wird als der von den Scheiben 15, 16 und dem Abstandhalter 1 begrenzte Raum definiert. Der an die Außenfläche 9 des Abstandhalters 1 angrenzende äußere Scheibenzwischenraum 13 ist ein streifenförmiger umlaufender Abschnitt der Verglasung, der von je einer Seite von den beiden Scheiben 15, 16 und auf einer weiteren Seite von dem Abstandhalter 1 begrenzt wird und dessen vierte Kante offen ist. Der Verglasungsinnenraum 3 ist mit Argon gefüllt. Zwischen jeweils einer Scheibenkontaktfläche 7.1 bzw. 7.2 und der benachbarten Scheibe 15 bzw. 16 ist ein Dichtmittel 4 eingebracht, das den Spalt zwischen Scheibe 15, 16 und Abstandhalter 1 abdichtet. Das Dichtmittel 4 ist Polyisobutylen. Auf der Außenfläche 9 ist eine äußere Abdichtung 6 im äußeren Scheibenzwischenraum 13 angebracht, die der Verklebung der ersten Scheibe 19 und der zweiten Scheibe 20 dient. Die äußere Abdichtung 6 besteht aus Polysulfid. Die äußere Abdichtung 6 schließt bündig mit den Scheibenkanten der ersten Scheibe 15 und der zweiten Scheibe 16 ab.

### Bezugszeichenliste

- 1: Abstandhalter
- 2: Isolierverglasung
- 3: Verglasungsinnenraum
- 4: Dichtmittel
- 5: polymerer Grundkörper
- 6: äußere Abdichtung
- 7: Scheibenkontaktflächen
- 7.1 7.2: erste Scheibenkontaktfläche zweite Scheibenkontaktfläche
- 8: Verglasungsinnenraumfläche
- 9: Außenfläche
- 10: Hohlkammer
- 11: Trockenmittel
- 12: Öffnungen
- 13: äußerer Scheibenzwischenraum
- 14: Perforationsnut
- 15: erste Scheibe
- 16: zweite Scheibe
- 17: Eckverbinder
- 18: hohlkammerinnenseitige Ecken

## Patentansprüche

1. Abstandhalter (1) für Isolierverglasungen mindestens umfassend einen polymeren Grundkörper (5) mindestens umfassend eine erste Scheibenkontaktfläche (7.1), eine zweite Scheibenkontaktfläche (7.2), eine Verglasungsinnenraumfläche (8), eine Außenfläche (9) und eine Hohlkammer (10),
wobei
- die erste Scheibenkontaktfläche (7.1) und die zweite Scheibenkontaktfläche (7.2) einander gegenüberliegen und parallel zueinander verlaufen,
- die Verglasungsinnenraumfläche (8) und die Außenfläche (9) über die erste Scheibenkontaktfläche (7.1) und die zweite Scheibenkontaktfläche (7.2) miteinander verbunden sind,
- die Hohlkammer (10) von der Verglasungsinnenraumfläche (8), der Außenfläche (9), der ersten Scheibenkontaktfläche (7.1) und der zweiten Scheibenkontaktfläche (7.2) umschlossen ist,
- die Außenfläche (9) benachbart zur ersten Scheibenkontaktfläche (7.1) einen ersten abgewinkelten Abschnitt (9a) und benachbart zur zweiten Scheibenkontaktfläche (7.2) einen zweiten abgewinkelten Abschnitt (9b) aufweist,
- der erste abgewinkelte Abschnitt (9a) und der zweite abgewinkelte Abschnitt (9b) einen Winkel α von jeweils 120° bis 150° zur jeweils benachbarten ersten Scheibenkontaktfläche (7.1) und zweiten Scheibenkontaktfläche (7.2) einnehmen und der Grundkörper (5) hohlkammerinnenseitige Ecken im Bereich eines abgewinkelten Abschnitts (9a, 9b) und der dazu benachbarten Scheibenkontaktfläche (7.1, 7.2) aufweist, wobei jede hohlkammerinnenseitige Ecke eines abgewinkelten Abschnitts (9a, 9b) mit der benachbarten Scheibenkontaktfläche (7.1, 7.2) mit einem Radius R₁ von 1,5 mm bis 2,5 mm abgerundet ist,
- der Grundkörper (5) im Bereich des ersten abgewinkelten Abschnitts (9a) und des zweiten abgewinkelten Abschnitts (9b) jeweils eine hohlkammerinnenseitige Ecke mit der Außenfläche (9) aufweist, die mit einem Radius R₂ von 1,5 mm bis 2,5 mm abgerundet ist,
- die Verglasungsinnenraumfläche (8) mit der ersten Scheibenkontaktfläche (7.1) und der zweiten Scheibenkontaktfläche (7.2) einen Winkel β von jeweils 87° bis 93° einnimmt und der Grundkörper (5) hohlkammerinnenseitige Ecken im Bereich der Verglasungsinnenraumfläche (8) und der ersten Scheibenkontaktfläche (7.1) und der zweiten Scheibenkontaktfläche (7.2) aufweist, die mit einem Radius R₃ von 1,3 mm bis 1,7 mm abgerundet sind.

2. Abstandhalter (1) nach Anspruch 1, wobei der erste abgewinkelte Abschnitt (9a) und der zweite abgewinkelte Abschnitt (9b) einen Winkel α von jeweils 130° bis 140° zur jeweils benachbarten ersten Scheibenkontaktfläche (7.1) und zweiten Scheibenkontaktfläche (7.2) einnehmen.

3. Abstandhalter (1) nach Anspruch 1 oder 2, wobei die Verglasungsinnenraumfläche (8) mit der ersten Scheibenkontaktfläche (7.1) und der zweiten Scheibenkontaktfläche (7.2) einen Winkel β von jeweils 89,5° bis 90,5° einnimmt.

4. Abstandhalter (1) nach einem der Ansprüche 1 bis 3, wobei der Grundkörper (5) zwischen den Scheibenkontaktflächen (7.1, 7.2) und den abgewinkelten Abschnitten (9a, 9b) sowie zwischen den abgewinkelten Abschnitten (9a, 9b) und der Außenfläche (9) außenseitige (19) Ecken aufweist, die mit einem Radius R₅ von 0,125 mm bis 0,7 mm, bevorzugt 0,3 mm bis 0,7 mm abgerundet sind.

5. Abstandhalter (1) nach einem der Ansprüche 1 bis 4, wobei die Höhe der Scheibenkontaktflächen (7.1, 7.2) zwischen 55 % und 80 %, bevorzugt zwischen 60 % und 75 %, der Gesamthöhe des Abstandhalters (1) beträgt.

6. Abstandhalter (1) nach einem der Ansprüche 1 bis 5, wobei die Wandstärke des Grundkörpers (5) zwischen 0,5 mm und 1,5 mm, bevorzugt zwischen 0,8 mm und 1,2 mm liegt.

7. Abstandhalter (1) nach einem der Ansprüche 1 bis 6, wobei in der Verglasungsinnenraumfläche (8) im Wesentlichen parallel zu den Scheibenkontaktflächen (7.1, 7.2) eine Perforationsnut (14) verläuft, die mehrere Öffnungen (12) in der Verglasungsinnenraumfläche (8) aufweist.

8. Abstandhalter (1) nach einem der Ansprüche 1 bis 7, wobei der Grundkörper (5) ein thermoplastisches Polymer als Grundmaterial, bevorzugt ein styrolbasiertes Polymer, besonders bevorzugt Styrol-Acrylnitril (SAN) umfasst.

9. Abstandhalter (1) nach einem der Ansprüche 1 bis 8, wobei der polymere Grundkörper (5) eine geschäumte Porenstruktur aufweist.

10. Abstandhalter (1) nach Anspruch 9, wobei der polymere Grundkörper (5) mittels eines Schäumungsmittels umfassend ein Treibmittel und ein Trägermaterial aufgeschäumt ist und das Schäumungsmittel bevorzugt in einer Menge von 0,5 Gew.-% bis 4,0 Gew.-%, besonders bevorzugt 0,5 Gew.-% bis 2,0 Gew.-%, insbesondere 0,8 Gew.-% bis 1,2 Gew.-% zum Polymergemisch des polymeren Grundkörpers (5) zugesetzt ist.

11. Abstandhalter (1) nach Anspruch 9 oder 10, wobei der polymere Grundkörper (5) ein thermoplastisches Polymer als Grundmaterial mit einem Anteil von 30,0 Gew.-% bis 70,0 Gew.-%, als einen elastomeren Zusatz ein thermoplastisches Elastomer und/oder ein thermoplastisches Terpolymer mit elastomerer Komponente mit einem Anteil von insgesamt 0,5 Gew.-% bis 20,0 Gew.-% und ein Verstärkungsmittel mit einem Anteil von 20,0 Gew.-% bis 45,0 Gew.-% enthält.

12. Abstandhalter (1) nach einem der Ansprüche 1 bis 11, wobei zumindest auf der Außenfläche (9) und den abgewinkelten Abschnitten (9a, 9b) des Grundkörpers eine gas- und wasserdichte Barrierefolie aufgebracht ist.

13. Isolierverglasung (2) mindestens umfassend einen Abstandhalter (1) nach einem der Ansprüche 1 bis 12, eine erste Scheibe (15) und eine zweite Scheibe (16), wobei die erste Scheibe (15) über ein Dichtmittel (4) an der ersten Scheibenkontaktfläche (7.1) des Abstandhalters (1) angebracht ist und die zweite Scheibe (16) über ein Dichtmittel (4) an der zweiten Scheibenkontaktfläche (7.2) des Abstandhalters (1) angebracht ist.

## Claims

1. Spacer (1) for insulating glazings, at least comprising a polymeric main body (5) which at least comprises a first pane-contact surface (7.1), a second pane-contact surface (7.2), a glazing interior surface (8), an outer surface (9), and a cavity (10), wherein
- the first pane-contact surface (7.1) and the second pane-contact surface (7.2) are opposite one another and extend in parallel with one another,
- the glazing interior surface (8) and the outer surface (9) are interconnected via the first pane-contact surface (7.1) and the second pane-contact surface (7.2),
- the cavity (10) is enclosed by the glazing interior surface (8), the outer surface (9), the first pane-contact surface (7.1), and the second pane-contact surface (7.2),
- the outer surface (9) has a first angled portion (9a) adjacent to the first pane-contact surface (7.1) and a second angled portion (9b) adjacent to the second pane-contact surface (7.2),
- the first angled portion (9a) and the second angled portion (9b) are each at an angle α of 120° to 150° to each adjacent first pane-contact surface (7.1) and second pane-contact surface (7.2), and the main body (5) has corners, on the inside of the cavity, in the region of an angled portion (9a, 9b) and the adjacent pane-contact surface (7.1, 7.2), wherein each corner, on the inside of the cavity, of an angled portion (9a, 9b) and the adjacent pane-contact surface (7.1, 7.2) is rounded with a radius R₁ of 1.5 mm to 2.5 mm,
- the main body (5) in each case comprises, in the region of the first angled portion (9a) and the second angled portion (9b) and the outer surface (9), a corner, on the inside of the cavity, which is rounded with a radius R₂ of 1.5 mm to 2.5 mm,
- the glazing interior surface (8) is at an angle ß of 87° to 93° to the first pane-contact surface (7.1) and the second pane-contact surface (7.2), and the main body (5) has corners, on the inside of the cavity, in the region of the glazing interior surface (8) and the first pane-contact surface (7.1) and the second pane-contact surface (7.2), which corners are rounded with a radius R₃ of 1.3 mm to 1.7 mm.

2. Spacer (1) according to claim 1, wherein the first angled portion (9a) and the second angled portion (9b) are each at an angle α of 130° to 140° to each adjacent first pane-contact surface (7.1) and second pane-contact surface (7.2).

3. Spacer (1) according to claim 1 or 2, wherein the glazing interior surface (8) is at an angle ß of 89.5° to 90.5° to the first pane-contact surface (7.1) and the second pane-contact surface (7.2).

4. Spacer (1) according to any of claims 1 to 3, wherein the main body (5) has outer (19) corners between the pane-contact surfaces (7.1, 7.2) and the angled portions (9a, 9b) and between the angled portions (9a, 9b) and the outer surface (9), which corners are rounded with a radius R₅ of 0.125 mm to 0.7 mm, preferably 0.3 mm to 0.7 mm.

5. Spacer (1) according to any of claims 1 to 4, wherein the height of the pane-contact surfaces (7.1, 7.2) is between 55% and 80%, preferably between 60% and 75%, of the total height of the spacer (1).

6. Spacer (1) according to any of claims 1 to 5, wherein the wall thickness of the main body (5) is between 0.5 mm and 1.5 mm, preferably between 0.8 mm and 1.2 mm.

7. Spacer (1) according to any of claims 1 to 6, wherein, in the glazing interior surface (8), a perforation groove (14) runs substantially parallel to the pane-contact surfaces (7.1, 7.2) and has a plurality of openings (12) in the glazing interior surface (8).

8. Spacer (1) according to any of claims 1 to 7, wherein the main body (5) comprises a thermoplastic polymer as base material, preferably a styrene-based polymer, particularly preferably styrene-acrylonitrile (SAN).

9. Spacer (1) according to any of claims 1 to 8, wherein the polymeric main body (5) has a foamed pore structure.

10. Spacer (1) according to claim 9, wherein the polymeric main body (5) is foamed by means of a foaming agent comprising a blowing agent and a carrier material, and the foaming agent is added to the polymer mixture of the polymeric main body (5) preferably in an amount of 0.5 wt.% to 4.0 wt.%, particularly preferably 0.5 wt.% to 2.0 wt.%, in particular 0.8 wt.% to 1.2 wt.%.

11. Spacer (1) according to claim 9 or 10, wherein the polymeric main body (5) contains a thermoplastic polymer in a proportion of 30.0 wt.% to 70.0 wt.% as a base material, a thermoplastic elastomer and/or a thermoplastic terpolymer having an elastomeric component in a total proportion of 0.5 wt.% to 20.0 wt.% as an elastomeric additive, and a reinforcing agent in a proportion of 20.0 wt.% to 45.0 wt.%.

12. Spacer (1) according to any of claims 1 to 11, wherein a gas-tight and water-tight barrier film is applied at least to the outer surface (9) and the angled portions (9a, 9b) of the main body.

13. Insulating glazing (2) at least comprising a spacer (1) according to any of claims 1 to 12, a first pane (15), and a second pane (16), wherein the first pane (15) is attached to the first pane-contact surface (7.1) of the spacer (1) by means of a sealant (4), and the second pane (16) is attached to the second pane-contact surface (7.2) of the spacer (1) by means of a sealant (4).

## Revendications

1. Espaceur (1) pour vitrages isolants comprenant au moins un corps de base polymère (5) comprenant au moins une première surface de contact de vitre (7.1), une seconde surface de contact de vitre (7.2), une surface d'espace intérieur de vitrage (8), une surface extérieure (9) et une chambre creuse (10), dans lequel
- la première surface de contact de vitre (7.1) et la seconde surface de contact de vitre (7.2) sont opposées l'une à l'autre et s'étendent parallèlement l'une à l'autre,
- la surface d'espace intérieur de vitrage (8) et la surface extérieure (9) sont reliées entre elles par l'intermédiaire de la première surface de contact de vitre (7.1) et de la seconde surface de contact de vitre (7.2),
- la chambre creuse (10) est entourée par la surface d'espace intérieur de vitrage (8), la surface extérieure (9), la première surface de contact de vitre (7.1) et la seconde surface de contact de vitre (7.2),
- la surface extérieure (9) présente une première section coudée (9a) adjacente à la première surface de contact de vitre (7.1) et une seconde section coudée (9b) adjacente à la seconde surface de contact de vitre (7.2),
- la première section coudée (9a) et la seconde section coudée (9b) forment un angle α allant de 120° à 150° par rapport à la première surface de contact de vitre (7.1) et à la seconde surface de contact de vitre (7.2) respectivement adjacente, et le corps de base (5) présente des coins côté intérieur de la chambre creuse dans la zone d'une section coudée (9a, 9b) et de la surface de contact de vitre (7.1, 7.2) adjacente à celle-ci, dans lequel chaque coin côté intérieur de la chambre creuse d'une section coudée (9a, 9b) est arrondi avec la surface de contact de vitre (7.1, 7.2) adjacente à un rayon R₁ allant de 1,5 mm à 2,5 mm,
- le corps de base (5) présente, dans la zone de la première section coudée (9a) et de la seconde section coudée (9b), respectivement un coin côté intérieur de la chambre creuse avec la surface extérieure (9) qui est arrondi à un rayon R₂ allant de 1,5 mm à 2,5 mm,
- la surface d'espace intérieur de vitrage (8) forme, avec la première surface de contact de vitre (7.1) et la seconde surface de contact de vitre (7.2), un angle ß allant respectivement de 87° à 93°, et le corps de base (5) présente des coins côté intérieur de la chambre creuse dans la zone de la surface d'espace intérieur de vitrage (8) et de la première surface de contact de vitre (7.1) et de la seconde surface de contact de vitre (7.2), lesquels sont arrondis à un rayon R₃ allant de 1,3 mm à 1,7 mm.

2. Espaceur (1) selon la revendication 1, dans lequel la première section coudée (9a) et la seconde section coudée (9b) forment un angle α allant respectivement de 130° à 140° par rapport à la première surface de contact de vitre (7.1) et à la seconde surface de contact de vitre (7.2) respectivement adjacente.

3. Espaceur (1) selon la revendication 1 ou 2, dans lequel la surface d'espace intérieur de vitrage (8) forme, avec la première surface de contact de vitre (7.1) et la seconde surface de contact de vitre (7.2), un angle ß allant respectivement de 89,5° à 90,5°.

4. Espaceur (1) selon l'une des revendications 1 à 3, dans lequel le corps de base (5) présente, entre les surfaces de contact de vitre (7.1, 7.2) et les sections coudées (9a, 9b), ainsi qu'entre les sections coudées (9a, 9b) et la surface extérieure (9), des coins côté extérieur (19) qui sont arrondis à un rayon R₅ allant de 0,125 mm à 0,7 mm, de préférence de 0,3 mm à 0,7 mm.

5. Espaceur (1) selon l'une des revendications 1 à 4, dans lequel la hauteur des surfaces de contact de vitre (7.1, 7.2) fait entre 55 % et 80 %, de préférence entre 60 % et 75 %, de la hauteur totale de l'espaceur (1).

6. Espaceur (1) selon l'une des revendications 1 à 5, dans lequel l'épaisseur de paroi du corps de base (5) est comprise entre 0,5 mm et 1,5 mm, de préférence entre 0,8 mm et 1,2 mm.

7. Espaceur (1) selon l'une des revendications 1 à 6, dans lequel une rainure de perforation (14) s'étend sensiblement parallèlement aux surfaces de contact de vitre (7.1, 7.2) dans la surface d'espace intérieur de vitrage (8) et présente plusieurs ouvertures (12) dans la surface d'espace intérieur de vitrage (8).

8. Espaceur (1) selon l'une des revendications 1 à 7, dans lequel le corps de base (5) comprend un polymère thermoplastique, de préférence un polymère à base de styrène, de manière particulièrement préférée du styrène-acrylonitrile (SAN), en tant que matériau de base.

9. Espaceur (1) selon l'une des revendications 1 à 8, dans lequel le corps de base polymère (5) présente une structure de pores expansée.

10. Espaceur (1) selon la revendication 9, dans lequel le corps de base polymère (5) est expansé au moyen d'un agent moussant comprenant un agent propulseur et un matériau de support et l'agent moussant est ajouté au mélange polymère du corps de base polymère (5) de préférence en une quantité allant de 0,5 % en poids à 4,0 % en poids, de manière particulièrement préférée de 0,5 % en poids à 2,0 % en poids, en particulier de 0,8 % en poids à 1,2 % en poids.

11. Espaceur (1) selon la revendication 9 ou 10, dans lequel le corps de base polymère (5) contient un polymère thermoplastique en tant que matériau de base dans une proportion allant de 30,0 % en poids à 70,0 % en poids, en tant qu'additif élastomère, un élastomère thermoplastique et/ou un terpolymère thermoplastique comportant un constituant élastomère dans une proportion allant au total de 0,5 % en poids à 20,0 % en poids, et un agent de renforcement dans une proportion allant de 20,0 % en poids à 45,0 % en poids.

12. Espaceur (1) selon l'une des revendications 1 à 11, dans lequel un film barrière étanche aux gaz et à l'eau est appliqué au moins sur la surface extérieure (9) et les sections coudées (9a, 9b) du corps de base.

13. Vitrage isolant (2) comprenant au moins un espaceur (1) selon l'une des revendications 1 à 12, une première vitre (15) et une seconde vitre (16), dans lequel la première vitre (15) est montée sur la première surface de contact de vitre (7.1) de l'espaceur (1) par l'intermédiaire d'un agent d'étanchéité (4) et la seconde vitre (16) est montée sur la seconde surface de contact de vitre (7.2) de l'espaceur (1) par l'intermédiaire d'un agent d'étanchéité (4).
